# EUROPEAN PATENT APPLICATION

(11) **EP 1 850 056 A2**
(43) Date of publication of application: **31.10.2007**
(21) Application number: 07251567.9
(22) Date of filing: 12.04.2007
(51) Int. Cl.: F16M 11/42

(54) **Camera track and dolly systems**

(30) Priority: 26.04.2006 GB 0608279
(71) Applicant: A&C Ltd, Harrow, Middlesex HA1 1PQ (GB)
(72) Inventor: Fletcher, Frank, Borehamwood, Hertfordshire WD6 4RT (GB); Sherwin, David, Watford WD25 0AD (GB)
(74) Representative: Carter, Stephen John

(57) **Abstract**

A system for moving a camera along a predefined path in space, the system comprising: a track (2), the track comprising at least one rail (10, 12); a dolly (4) adapted to ride on the track; and a rack and pinion drive mechanism (6) for driving the dolly along the track. The drive mechanism includes a rack (40) extending along the track and a driven pinion (60) mounted on the dolly, and the rack is positioned vertically inline with the at least one rail of the track.

## Description

### Field of the Invention

The present invention relates to camera track and dolly systems for moving cameras (e.g. film and/or video cameras) along a predetermined path.

### Background

When creating films and videos it is very often necessary to change the orientation and position in space of one or more cameras during shooting. To control the orientation of a film or video camera it is known to mount the camera on a remote control head, enabling pan, tilt and roll movements of the camera and lens. Movement of the camera in space is typically achieved by mounting the camera (generally on its remote control head) on a carriage, known as a "dolly", that rides on a linear track.

Known track and dolly systems typically use tracks having a pair of parallel rails. The rails are held a fixed, constant distance apart by sleepers spaced along the track at regular intervals. Some systems use only straight tracks but other use curved tracks or combinations of straight and curved tracks (curved in two or three dimensions).

The dolly is generally a rectangular carriage with wheels that are profiled to guide the dolly along the track. In some known systems the profile of the wheels serves to hold the dolly onto the rails even when the dolly is inverted.

Generally the dolly is driven along the track. Various drive arrangements are known, including frictions drives mounted on the dolly and winch systems, in which the drive is fixed at one or both ends of the track and the dolly is driven back and forth (or sometimes just in a single direction) by a cable or belt connected between the dolly and the winch drive. For curved tracks friction drives are most common because winch systems can only be used where a track curves by no more than about 10 degrees. For straight tracks it is also known to use a rack and pinion drive, with a rack running between the two rails or outside of the rails (e.g. on the edge of the sleepers) and a driven pinion mounted on the dolly.

When shooting film and video footage, the repeatability of camera positions can be important, especially as scenes are typically shot and re-shot multiple times. It is important, therefore, that track and dolly systems and their drive mechanism enable accurate and repeatable positioning and movement of the camera along the track.

Straight track systems using friction drives perform well in this regard. On curved tracks, however, friction drives have been found to slip, resulting in less accurate repetition of camera movements. A winch drive can give better accuracy for repeating movements on curved tracks but, as noted above, this approach significantly restricts the extent to which the track can curve.

The most accurate and repeatable drive arrangement, especially in a straight line, is a rack and pinion because no slippage can occur. Rack and pinion arrangements are, however, not easy to use with curved tracks as it is necessary to ensure that the correct pitch circle diameter ("PCD") of the pinion relative to the rack is maintained along the length of the track and it can be particularly difficult to do this at transitions between straight and curved sections of track. Curved racks are also expensive.

### Summary of Invention

In one aspect, the present invention provides a system for moving a camera along a predefined path in space, the system comprising:
a track, the track comprising at least one rail;
a dolly adapted to ride on the track; and
a rack and pinion drive mechanism for driving the dolly along the track, the drive mechanism including a rack extending along the track and a driven pinion mounted on the dolly;
wherein the rack is positioned vertically inline with said at least one rail of the track.

Preferably the track comprises two parallel rails, the rack being positioned vertically inline with one of the rails.

By mounting the rack inline with a rail of a (single or twin rail) curved track the pitch circle diameter of the rack is the same as the pitch circle diameter of the rail with respect to the pinion of the rack and pinion drive mechanism and remains so as the dolly (on which the pinion is mounted) rides along the curved track. In this way it is much easier to ensure that the PCD of the pinion relative to the rack is maintained along the length of the track even at transitions from straight to curved sections of the track and *vice versa*.

The term "vertical" as used herein (above and further below) is to be taken as a relative term (relative to the geometry of the track) and not necessarily strictly as vertical in space because the track will not necessarily be arranged strictly horizontal in space along its full length (or even at any point along its length in some cases). For twin rail tracks, the vertical centre line of the rail is a line extending through the rail perpendicular to both the length direction of the rail and the width direction of the track (i.e. perpendicular to a line joining the two rails).

The rotational axis of the pinion is generally parallel to the vertical centre line of the rail.

Preferably the rack and rail are held in position relative to on another by a common support member. The rail and/or the rack may be formed integrally with the support member. Preferably at least the rail is formed integrally with the support member. For instance, the support member can be formed as an extrusion with the rail provided as an integral portion of the extruded cross-section.

Whilst is would be possible to machine or otherwise form a rack onto an extruded member, this would be costly. Preferably, therefore, the rack is a separate component mounted on the support member.

The support member may include means for locating and/or securing in position a separate rack component. For example, where the support member is an extruded member (with or without the rail formed integrally with it) the cross-section of the extrusion may be shaped to provide one or more locating and/or retaining formations for the rack. Suitable locating/retaining formations include protruding lugs and recessed channels (preferably with lips that can retain corresponding shoulders on the rack section).

One preferred form of the support member is a generally vertically extending plate-like section with the (preferably integrally formed) rail portion protruding from the top (or bottom) edge and off-set laterally so that the centre line of the rail is to one side of the plate section. The rack can then be mounted on one side face of the plate section (the side to which the rail is offset) such that it lies directly below (or above) the rail, in line with the rail centre line.

Preferred embodiments of the present invention use a flexible rack component, e.g. of a moulded rubber or plastics material, that can readily conform to the shape of a curved track. This allows the rack to be flexed to assemble it with a curved support member section (for a correspondingly curved rail), for example by introducing it at one end of the support member section and sliding it into or onto locating and retaining formations on the support from that end.

The pinion of the rack and pinion drive mechanism is mounted on the dolly such that when the dolly sits on the rail or rails of the track the pinion (typically a spur gear) engages the rack. By driving the pinion the dolly can therefore be moved back and forth along the track and the positive engagement of the pinion with the rack results in very accurate and repeatable positioning of the dolly (and hence the camera that it carries) along the length of the track.

Furthermore, with the rack component of the rack and pinion drive mechanism mounted in the preferred manner discussed above, the rack is by default retained inline with the rail along the complete length of the track, enabling the relative position of the rack and pinion to be easily maintained irrespective of the curvature of the track.

To further ensure that the pinion (more specifically the PCD of the pinion) can maintain its optimum position with respect to the rack, the pinion is preferably mounted on the dolly in a manner that allows its rotational axis to itself pivot about a vertical axis in line with the vertical centre line of the rail with which the rack is associated. For example, the drive shaft of the pinion (which is at its rotational axis) can be mounted on a swinging arm that pivots on a bearing mounted on the dolly to be inline with the vertical centre line of the rail as the dolly rides along the track. This enables some degree of movement of the pinion relative to the dolly to ensure that it remains properly engaged with the rack at all times, especially at transitions between straight and curved sections of the track.

In another aspect, the invention provides a rack and rail assembly for use with a system in accordance with the first aspect above, the assembly comprising:
a support member;
a rail fixed to the support member for engaging one or more wheels of the dolly and protruding from the support member so that a vertical centre line of the rail is offset to one side of the support member; and
a rack member fixed to support member to protrude from the support member to the same side as the rail with the pitch circle diameter of the rack being inline with the vertical centre line of the rail.

The assembly may be curved along its length to provide a rail for a curved section of dolly track.

The rail is preferably formed integrally with the support member. The integral support member and rail may be an extruded member.

The rack is preferably a separate component mounted on the support member. Most preferably the rack is flexible so that it can easily conform to the shape of the rail/support member along its length.

The support member may have one or more formations to locate and retain the rack member in the manner already discussed above.

In a further aspect, the invention provides an extruded support and rail member for use with preferred embodiments of the camera dolly and track system of the present invention, the extruded member comprising:
a support portion;
a rail portion for engaging one or more wheels of a dolly and protruding from the support portion so that a vertical centre line of the rail portion is offset to one side of the support member; and
one or more rack locating and/or retaining formations formed on the side of the support portion to which the rail portion is offset for retaining the rack of a rack and pinion drive mechanism with the pitch circle diameter of the rack inline with the vertical centre line of the rail.

The locating and retaining formations may take any of the forms already discussed above.

### Brief Description of Drawings

An embodiment of the invention will now be described, by way of example only, with reference to the accompanying drawings, in which:
Fig. 1 shows, in cross-section (perpendicular to the direction of motion) and camera dolly and track system in accordance with an embodiment of the present invention;
Fig. 2 shows, on an enlarged scale, in cross-section, one rail extrusion and rack assembly of the system of fig. 1; and
Fig. 3 shows a schematic plan view, on a reduced scale, of the system of fig. 1, illustrating a dolly moving from a straight track section onto a curved track section.

### Description of Embodiment

The figures illustrate a presently preferred embodiment of the camera dolly and track system of the present invention. In overview, the system includes a track 2 and a dolly (carriage) 4 that rides on the track 2. A camera (not shown) can be mounted on the upper side of the dolly 4, for example on a remote control head (also not shown). The dolly 4 is driven along the track 2 by a rack and pinion drive mechanism, indicated generally at 6.

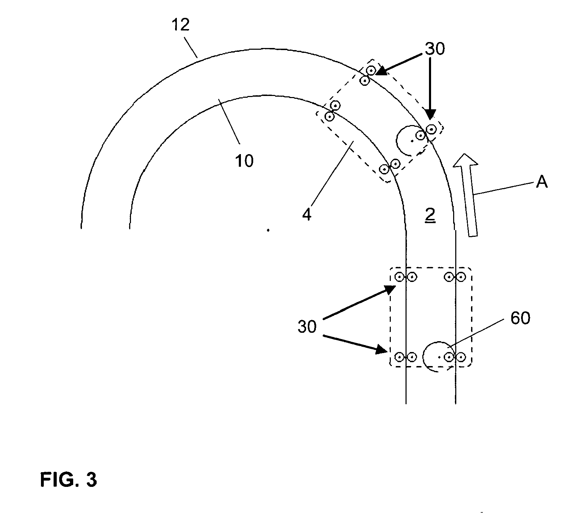

The track can include straight and curved sections (see fig. 3) and the dolly drive mechanism 6 is configured in the manner described below to ensure that it operates to accurately and repeatedly move the dolly 4 (and hence the camera mounted on it) along the track 2 on curved as well as straight sections of the track and at transitions between curved and straight sections. This ability to use rack and pinion type drives with curved dolly tracks offers significant advantages of the prior art curved systems using friction drives and winch drives: specifically, it offers greater accuracy and repeatability compared with friction drives on curved tracks and allows for tracks with more curvature than is possible using winches.

The track 2 may run along the ground or may be elevated above the ground on a series of stanchions or other supports that lift or suspend the track above ground level. The track is laid out to follow a desired path (two-dimensional or three-dimensional) along which a camera is to travel for shooting a scene (or part of a scene) in a film or video or the like. When elevated, the elevation of the track above the ground may vary along the length of the track and some parts of the track may be elevated whilst other parts of the track are on the ground.

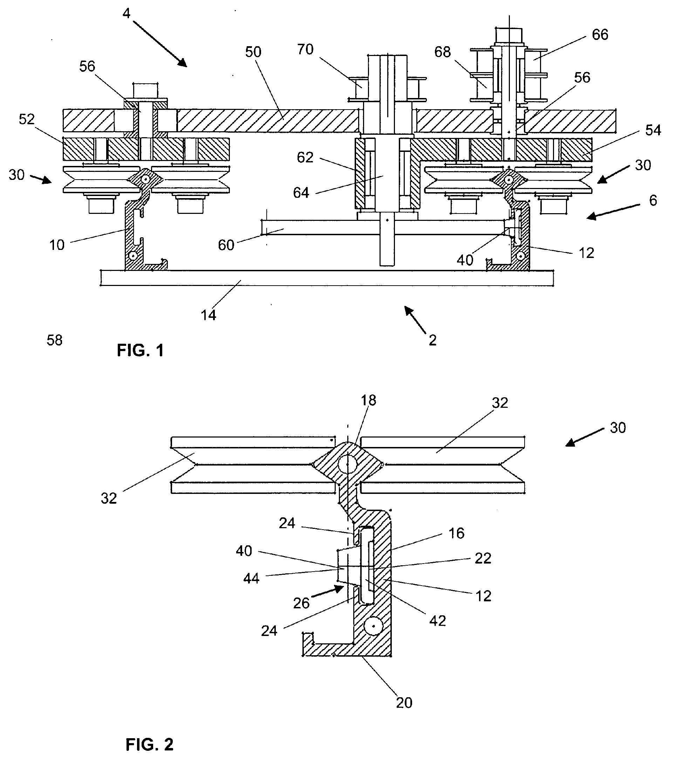

In more detail, and looking initially at figs. 1 and 2, the track 2 includes a pair of rails 10, 12 that extend along the track parallel with one another, held at a fixed distance apart by sleepers 14. Each rail 10, 12 is an extruded member (preferably of a light weight material such as an aluminium alloy) having a support portion 16 and a rail portion 18. The two rails have the same cross-section and are laid such that the form of one rail mirrors the other about a centre line of the track.

Each rail 10, 12 has a generally 'L' shaped configuration forming the support portion 16 with a bulbous head forming the rail portion 18. The base of the 'L' provides a mounting surface 20 for fixing the rail to a respective end of each sleeper 14. The upright part of the 'L', includes a recessed channel 22 on one side (in this example the side to which the base of the 'L' projects). The channel opening is formed with a pair of lips 24 top and bottom to provide the channel with a mouth 26, opening to one side of the support portion 16, that is narrower (in its vertical dimension) than the main part of the channel.

The rail portion 18 protrudes above and is offset to one side of (the same side as the channel opening) the upright part of the support portion 18. As best seen in fig. 2, in this example, the rail portion 18 has a generally rhombus shape cross-section. Its lateral dimension is slightly greater than its vertical dimension in this instance but other shapes of rail can be used.

The wheels 30 of the dolly 4 engage the rail portion 18 to locate the dolly 4 on the track. In this example the wheels are pairs of horizontally opposed 'V' rollers 32 that engage opposite sides of each rail. In this way they serve to hold the dolly 4 on track 2 (as well as locating it) on sections of the track that are inclined or even inverted. There are four sets of rollers 32 respectively at the front and rear of each side of the dolly (two sets engaging each rail), as best seen in fig. 3. Although in this example each set of rollers includes two opposed rollers, each set of rollers can include two or more rollers.

A flexible rack 40 of the rack and pinion drive system 6 is mounted in the channel 22 on the inside of one of the rail extrusions 12 (the right-hand rail as seen in fig. 2). The rack 40 is moulded in a flexible rubber-like polymer material. The rack may be a DURACON rack available for example from KHK Co., Ltd. of Kawaguchi City, Saitama, Japan (e.g. KHK's rack, part number DR1-200).

The flexible rack 40 has a base portion 42 that is received in the channel 22 and a narrower, toothed rack portion 44 that protrudes through the mouth 26 of the channel 22 so that the PCD of the rack is vertically below the rail inline with the vertical centre line (shown in chain-link line in fig. 2) of the rail. The lips 24 of the channel 22 retain the rack 40 in place. To assemble the rack 40 with the rail extrusion 12, the rack 40 can be slid into the channel from one end of the extrusion.

Referring again to fig. 1, the dolly 4 comprises a dolly chassis 50 that mounts the various components of the dolly and its drive mechanism (not all of which are shown) and the camera with its mount (also not shown).

Each pair of rollers 32 (i.e. wheels) of the dolly 4 is mounted on a bogie 52, 54 by a pivot 56 that is inline with the vertical centre line of the respective rail. This allows the roller pairs to pivot slightly to negotiate curves in the track. The rollers 32 themselves are mounted for rotation on the bogie 52, 54 in respective bearings 58.

The bogie 54 on the rack side of the dolly 4 is extended towards the centre of the dolly chassis 50 to provide a further bearing 62 for mounting the pinion 60 of the rack and pinion drive mechanism 6. The pinion bearing 62 (and hence the rotational axis of the pinion 60) therefore pivots with the bogie 54 about an axis on the centre line of the rail 12. By mounting the pinion 60 on a swinging arm in this manner, the correct relationship between the pinion 60 and the flexible rack 40 that it engages.

The pinion 60 itself is mounted on a drive shaft 64 that extends through the bearing 62 to suspend the pinion 60 below the dolly chassis 50 alongside the rack 40 mounted on the rail 12. The pinion 60 is a spur gear in this example with teeth on its periphery that mesh with the rack 40.

The drive shaft 64 terminates at its upper end above the dolly chassis 50 (it passes through a part circular slot in the chassis 50 to enable its pivoting motion on the swinging arm). The pinion is driven by a dolly drive motor (not shown) mounted on the dolly chassis 50 via a series of pulleys 66, 68, 70. Two of the pulleys 66, 68 are mounted vertically above the rail 12 in line with the vertical centre line of the rail. The third pulley 70 is fixed to the upper end of the pinion drive shaft 64. A toothed belt (not shown) extends from the dolly drive motor to the upper one 66 of the pulleys mounted in line with the rail. This pulley is locked to the lower pulley 68 to rotate with it. A further toothed belt (also not shown) extends from the lower pulley 68 to the pulley 70 at the top end of the pinion drive shaft 64. The motor drives to upper pulley 66, and consequently the lower pulley 68, via the first toothed belt, the lower pulley in turn driving the pulley 70 at the top of the pinion drive shaft 64 via the second toothed belt in order to drive the pinion 60 itself and propel the dolly 4 along the track 2. The direction of rotation of the motor can be controlled to control the direction of movement of the dolly 4 along the track 2. The described arrangement of pulleys 66, 68, 70 enables the appropriate tension to be maintained in the toothed drive belts as the bogie / swinging arm 54 pivots in use.

Referring to fig. 3, which shows the dolly 4 in two different positions along the track 2, it can be seen that as the dolly 4 travels along the track 2 from a straight section of the track 2 to a curved section (the direction of motion is indicated by arrow 'A'), the bogies 52, 54 pivot to allow the dolly 4 to negotiate the curve and the pinion 60 pivots on bogie / swinging arm 54 to maintain the correct position of the pinion 60 relative to the rack 40 mounted on the rail 12. By mounting the rack 40 on the rail 12 with its PCD coincident with the vertical centre line of the rail it becomes possible to maintain this correct relationship between pinion 60 and rack 40 without a complex design of curved rack irrespective of the curvature of the track. The use of a flexible rack insert retained in the rail extrusion also minimises manufacturing difficulties and therefore costs.

The skilled person will appreciate that the specific embodiment described above is given by way of example only. Many and various modifications are possible within the scope of the invention.

## Claims

1. A system for moving a camera along a predefined path in space, the system comprising:
a track, the track comprising at least one rail;
a dolly adapted to ride on the track; and
a rack and pinion drive mechanism for driving the dolly along the track, the drive mechanism including a rack extending along the track and a driven pinion mounted on the dolly;
wherein the rack is positioned vertically inline with said at least one rail of the track.

2. The system according to claim 1, wherein the track comprises two parallel rails, the rack being positioned vertically inline with one of the rails.

3. The system according to claim 1 or claim 2, wherein the rack and rail are held in position relative to one another by a common support member.

4. The system according to claim 3, wherein the rail is formed integrally with the support member.

5. The system according to claim 3 or claim 4, wherein the rack is formed integrally with the support member.

6. The system according to claim 3 or claim 4, wherein the rack is a separate component mounted on the support member.

7. The system according to claim 6, wherein the support member is an extruded member.

8. The system according to claim 7, wherein the cross-section of the extrusion is shaped to provide one or more locating and/or retaining formations for locating and/or securing in position the separate rack component.

9. The system according to claim 8, wherein the locating and/or retaining formations include a recessed channel and one or more lip(s).

10. The system according to any one of the preceding claims, wherein the rack includes a flexible rack component that can conform to the shape of a curved track.

11. The system according to any one of the preceding claims, wherein the pinion is mounted on the dolly such that when the dolly rides on the track and the pinion engages with the rack, a rotational axis of the pinion pivots about a vertical axis in line with a vertical centre line of the rail with which the rack is associated.

12. The system according to any one of the preceding claims, wherein the system further comprises a camera mounted on the dolly.

13. A rack and rail assembly for use with a system according to any one of claims 1 to 12, the assembly comprising:
a support member;
a rail fixed to the support member for engaging one or more wheels of the dolly and protruding from the support member so that a vertical centre line of the rail is offset to one side of the support member; and
a rack member fixed to the support member to protrude from the support member to the same side as the rail, with the pitch circle diameter of the rack being inline with the vertical centre line of the rail.

14. An extruded support and rail member for use with the system according to any one of claims 1 to 12, the extruded member comprising:
a support portion;
a rail portion for engaging one or more wheels of a dolly and protruding from the support portion so that a vertical centre line of the rail portion is offset to one side of the support member; and
one or more rack locating and/or retaining formations formed on the side of the support portion to which the rail portion is offset for retaining the rack of a rack and pinion drive mechanism with the pitch circle diameter of the rack inline with the vertical centre line of the rail.
